Europäisches Patentamt

European Patent Office

Office européen des brevets

(19)

(11) Veröffentlichungsnummer: **0 033 141**
**B2**

(12) # NEUE EUROPÄISCHE PATENTSCHRIFT

(45) Veröffentlichungstag der neuen Patentschrift:
07.01.88

(51) Int. Cl.⁴: **G 02 C 7/04**

(21) Anmeldenummer: 81100500.8

(22) Anmeldetag: 23.01.81

(54) **Weiche Kontaktlinse.**

(30) Priorität: 25.01.80 DE 3002664

(43) Veröffentlichungstag der Anmeldung:
05.08.81 Patentblatt 81/31

(45) Bekanntmachung des Hinweises auf die Patenterteilung:
24.10.84 Patentblatt 84/43

(45) Bekanntmachung des Hinweises auf die Entscheidung
über den Einspruch:
07.01.88 Patentblatt 88/1

(84) Benannte Vertragsstaaten:
CH DE FR GB IT LI

(56) Entgegenhaltungen:
DE - A - 2 645 037
DE - A - 2 748 481
FR - A - 1 495 833
GB - A - 2 024 450

"Die Kontaktlinse" 9. Jahrg. (1974), S. 211-217
Zeitschrift "NOJ" 11/1978, S. 93-97
Buch: Hirst "Soft Contact Lenses"; John Wiley & Sons,
Inc; 1978, S. 443-452
"ADL Services" 25. Okt. 1977, Schrift L 77 1004

(73) Patentinhaber: **Titmus Eurocon Kontaktlinsen GmbH &
Co. KG, Goldbacher Strasse 57, D-8750 Aschaffenburg
(DE)**

(72) Erfinder: **Müller-Lierheim, Wolfgang, Dr.,
Seebornstrasse 39, D-8750 Aschaffenburg (DE)**
Erfinder: **Schäfer, Horst, Dr., Beethovenstrasse 27,
D-8750 Aschaffenburg-Obernau (DE)**
Erfinder: **Bärenz, Manfred, August-Bedel-Strasse 70,
D-6072 Dreieich (DE)**
Erfinder: **Höfer, Peter, Karlsbader Strasse 50,
D-8750 Aschaffenburg (DE)**
Erfinder: **Müller, Ulrich, Tannenstrasse 4,
D-8752 Johannesberg (DE)**

(74) Vertreter: **Nöth, Heinz, Dipl.-Phys., Patentanwalt
Müllerstrasse 1, D-8000 München 5 (DE)**

EP 0 033 141 B2

**Beschreibung**

Die Erfindung betrifft einen Linsensatz von weichen Kontaktlinsen mit einer Innenfläche, bei der alle Schnitte, die die optische Achse enthalten, Ellipsen sind.

Bei derartigen Kontaktlinsen ist es bekannt, die Innenfläche der Kontaktlinse, d.h. die Linsenfläche, welche auf der Cornea aufliegt, asphärisch, insbesondere elliptisch, auszubilden, um eine Anpassung an die Vorderfläche der menschlichen Cornea zu gewinnen («Die Kontaktlinse», 9. Jahrgang, Nr. 3, 1974, Seiten 211–217).

Trotz intensiver Bemühungen ist es jedoch bislang nicht gelungen, einen Satz von weichen Kontaktlinsen zu schaffen, der sich dadurch auszeichnet, dass mittels einer einzigen Innengeometrie der breite Bereich möglicher Hornhautkrümmungsradien abgedeckt werden kann, wodurch für die Mehrzahl aller Kontaktlinsenträger eine Anpassung der Linsen innerhalb eines breiten Scheitelbrechwertbereiches im herkömmlichen Sinne entfallen könnte.

Aufgabe der Erfindung ist es daher, einen Satz von weichen Kontaktlinsen der eingangs genannten Art zu schaffen, der es ermöglicht, für einen breiten Bereich von Hornhautkrümmungsradien, d.h. für die Mehrzahl aller Kontaktlinsenträger, mit einer einzigen Innengeometrie der Kontaktlinsen auszukommen. Diese Aufgabe wird erfindungsgemäss dadurch gelöst, dass im gequollenen Zustand der Linsen sämtliche Linsen einen einzigen Scheitelkrümmungsradius aus dem Bereich von 7,0 bis 9,6 mm und eine einzige numerische Exzentrizität der Ellipsen aufweisen, die einen der Werte im Bereich von 0,1 bis 0,6 besitzt, wodurch eine Sortierung lediglich in Dioptrienwerte ermöglicht wird.

Geeignete Bereiche der Exzentrizität sind 0,2 bis 0,5, insbesondere 0,3 bis 0,4, bevorzugt 0,36 oder 0,48. Ein geeigneter Bereich für den Scheitelkrümmungsradius ist 8,0 bis 8,4 mm und ein bevorzugter Wert liegt bei 8,2 mm. Die Mittendicke der gequollenen Linse liegt bevorzugt im Bereich von 0,02 bis 0,6 mm und insbesondere von 0,02 bis 0,25 mm. Der Enddurchmesser der Linse kann im Bereich von 8,5 bis 15 mm und insbesondere von 12,5 bis 14 mm liegen.

Mit einem derartigen Satz von weichen Kontaktlinsen, deren Innengeometrie innerhalb des angegebenen Bereiches liegt, erübrigt sich innerhalb eines relativ breiten Scheitelbrechwertbereichs Anpassungen bei Kontaktlinsenträgern, für die die Ophthalmometermessung zentrale Hornhautradien von 7,2 bis 8,4 mm und einen sichtbaren Irisdurchmesser von 10,8 bis 12,4 mm ergibt. Weil dadurch nur eine Auswahl der Linse bezüglich des notwendigen Scheitelbrechwertes erforderlich ist, ist nur eine Minimalzahl von Linsen notwendig, deren Anzahl durch die Dioptrien-Abstufung bestimmt wird; es ist also nicht mehr notwendig, eine Anpassung im herkömmlichen Sinne mittels eines Anpasssatzes vorzunehmen, sondern es genügt eine Refraktionsbestimmung und eine Inspektion der vorderen Augenabschnitte, bevor die Linse eingesetzt wird. Es ist dann lediglich nur noch das Sitzverhalten zu überprüfen und eine evtl. Refraktionsänderung durchzuführen. Ferner wird ein flacher Sitz im Sehbereich des Auges erzielt, wobei aufgrund der in den Ansprüchen 9 bis 12 angegebenen Bemessung der Bevelzone ein verbessertes dynamisches Verhalten der Linse, insbesondere bei Augen- und Lidbewegungen, erzielt wird. Dieses bewirkt ferner ein optimales Unterspülen der Linse mit Tränenflüssigkeit, womit diese Linse den physiologischen Bedürfnissen des Auges in optimaler Weise Rechnung trägt. Beim Verschieben der Linse wird durch die angegebene Bemessung der Bevelzone vermieden, dass sich der Linsenrand bei Verschieben der Linse aus einem steileren Augenbereich in einen flacheren Augenbereich «eingräbt». Es bildet sich am Linsenrand aufgrund der angebenen Bevelzone ein Tränenflüssigkeits-Meniskus, durch den die Beweglichkeit der Linse unter Kontrolle gehalten wird. Wesentlich ist dabei, dass sich die elliptische Innenkurve der Linseninnenfläche übergangslos in die im Querschnitt kreissegmentförmige Bevelzone, welche einen entgegengesetzten Innenkurvenverlauf nimmt, fortsetzt, wodurch man ständig eine einwandfreie Zentrierung der Linse erreicht.

Bevorzugt kommen für die weiche Kontaktlinse solche Materialien zur Anwendung, die eine Reissdehnung im Bereich von 100 bis 500%, insbesondere 120 bis 250%, sowie eine Shore A-Härte im Bereich von 15 bis 75, insbesondere 25 bis 60 aufweisen.

Für die im vorstehenden beschriebene weiche Kontaktlinse eignen sich die in den Ansprüchen 17 bis 30 angegebenen Stoffe bzw. Copolymerisate, wobei diese Copolymerisate auch bei Kontaktlinsen mit anderer Geometrie zum Einsatz kommen können. Die angegebenen Copolymerisate besitzen die obengenannten physikalischchemische Eigenschaften und gewährleisten über den gesamten Kontaktlinsenkörper hin einen gleichmässigen Quellungsgrad. Die im wesentlichen aus fünf Komponenten bestehenden Copolymerisate lassen sich in Abhängigkeit von den Anteilen der Komponenten auf einen Wassergehalt von 40 bis 90%, bevorzugt 60%, einstellen.

Polyhema, welches die Komponenten mit dem grössten Anteil im Copolymerisat ist, lässt nur einen relativ geringen Wassergehalt von etwa 40% zu. Um den Wassergehalt zu erhöhen, enthält das Copolymerisat eine ungesättigte Carbonsäure, wobei die dadurch bedingte Verlagerung des isoelektrischen Punktes in den sauren Bereich, welche die unerwünschte Bildung von proteinhaltigen Ablagerungen fördern kann, durch die Zugabe eines basischen Monomers ausgeglichen wird. Ein aus diesen drei Komponenten bestehendes Copolymerisat lässt zwar einen erhöhten Wassergehalt zu, besitzt jedoch nur eine geringe Reissfestigkeit. Durch die Zugabe von aliphatischem Acrylat oder Methacrylat lässt sich die Reissfestigkeit erhöhen, jedoch besitzt das Material dann einen unzulässig hohen Quellungsgrad. Dieser lässt sich durch einen Vernetzer bremsen, wobei jedoch der in Anspruch 22 angegebene Vernetzer eine dehnbare Quervernetzung aufweist, so dass bei der Quellung Spannungen im Kontaktlinsenmaterial vermieden werden und die obengenannten physikalischchemischen Eigenschaften erhalten bleiben. Wie die vorstehenden Ausführungen zeigen, ergänzen sich die Eigenschaften der in den Copolymerisaten enthaltenen fünf Komponenten in kombinatorischer Weise.

Ein weiteres geeignetes Kontaktlinsenmaterial ist aus der US-PS 4 073 577 bekannt, bei dem es sich um ein spezielles Material auf HEMA-Basis handelt. Dieses bekannte polymere Hydrogelmaterial wird gewonnen durch Photopolymerisierung von Hydroxyäthylmethacrylat in Abwesenheit von Quervernetzungsbildern. Dieses Material besitzt die im vorstehenden geschilderten gewünschten Eigenschaften und ausserdem eine hohe Verschleissfestigkeit und Sauerstoffdurchlässigkeit.

Weitere geeignete Kontaktlinsenzusammensetzungen sind weiche Silikone und weiches Polyurethan.

Ein weiteres geeignetes Kontaktlinsenmaterial ist das unter dem Handelsnamen DW 1 vertriebene Kontaktlinsenmaterial der Firma Duragel Limited (Data Sheet DW 1 der Firma Duragel Limited, Meopham Trading Estate, Meopham, Gravesend, Kent DA 13 OLT). Dieses Material besitzt einen Wassergehalt von 60,0%. Auch mit diesem Material lassen sich Linsen mit einer Exzentrizität der elliptischen Innenfläche von 0,48 bei einem Enddurchmesser von 9,35 mm und einer Bevelbreite von 0,15 mm im nicht hydratisierten Zustand herstellen.

Die Kontaktlinse kann in vorteilhafter Weise auch als multifokale, insbesondere bifokale Linse ausgebildet sein.

In den beiliegenden Figuren ist ein Ausführungsbeispiel der Erfindung schematisch dargestellt. Anhand dieser Figuren soll die Erfindung noch näher erläutert werden. Es zeigen:

Fig. 1 einen Schnitt einer Kontaktlinsenhälfte, die ein Ausführungsbeispiel der Erfindung ist, in 20facher Vergrösserung in hydriertem Zustand und

Fig. 2 in 62,5facher vergrösserter Darstellung einen Schnitt durch die Bevelzone der in der Fig. 1 dargestellten Kontaktlinse in hydriertem Zustand.

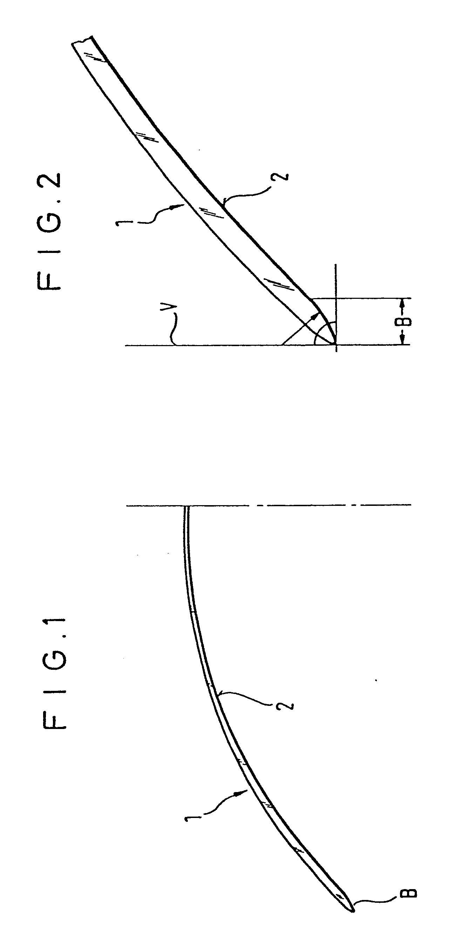

Eine in den Figuren dargestellte Kontaktlinse 1 mit einer Exzentrizität von 0,36 und einem Enddurchmesser von 9,35 mm besitzt eine Innenfläche 2 mit elliptischer Krümmung und, wie in der Fig. 2 näher dargestellt, eine umlaufende Bevelzone B mit einer Breite von beispielsweise 0,15 mm. Wie die Figur zeigt, geht die elliptische Innenkurve der Innenfläche 2 nahtlos, d.h. tangential in die kreissegmentförmige Fläche der Bevelzone B über, wobei die Schnittlinie der Bevelzone im rechten Winkel auf eine durch den äusseren Rand gelegte Vertikale V im rechten Winkel auftritt. Die gleiche elliptische Grundgeometrie ergibt sich bei einer Linse mit einer Exzentrizität von 0,48, die im voll hydratisierten Zustand einen Durchmesser von 13,00 mm aufweist. Die dargestellte elliptische Krümmung der Innenfläche 2 und der kreissegmentförmige Querschnitt der Bevelzone B, die nahtlos bzw. tangential ineinander übergehen, lassen sich mit Hilfe eines elliptischen und kreisförmigen Werkzeuges, insbesondere Diamanten, herstellen, wenn die Linse sich im ungequollenen, d.h. harten, Zustand befindet. Danach erfolgt in üblicher Weise das Polieren, Reinigen und Hydratisieren der Linse, beispielsweise in physiologischer Kochsalzlösung, und die abschliessende Überprüfung der optischen Parameter. Die fertige Linse kann dann beispielsweise wiederum in physiologischer Kochsalzlösung eingelagert und autoklaviert werden. Zur weiteren Erläuterung dienen die folgenden Beispiele.

Beispiel 1
Copolymerisat auf HEMA-Basis als Linsenmaterial.

Im nichtgequollenen Zustand besitzt die Linse einen Durchmesser von 9,19 mm und eine Bevelbreite von 0,15 mm. Die numerische Exzentrizität der elliptischen Innenfläche kann 0,36 oder 0,48 betragen. Das Kontaktlinsenmaterial ist ein Copolymerisat mit der folgenden Zusammensetzung:

| | |
|---|---|
| HEMA | 77,8 Gew.% |
| Vinylpyrrolidon | 3,4 Gew.% |
| Methacrylsäure | 5,2 Gew.% |
| Butylmethacrylat | 12,9 Gew.% |
| Triäthylenglycoldimethacrylat | 0,7 Gew.% |

Der Wassergehalt der gequollenen Kontaktlinse beträgt 59 Gew.% ± 1 Gew.%.

Beispiel 2
Copolymerisat auf HEMA-Basis als Linsenmaterial.

Die Linse besitzt eine Geometrie nach der Erfindung ähnlich der im Beispiel 1 jedoch hat das Linsenmaterial die folgende Zusammensetzung:

| | |
|---|---|
| HEMA | 78,35 Gew.% |
| Vinylpyrrolidon | 3,5 Gew.% |
| Methacrylsäure | 5,0 Gew.% |
| Butylmethacrylat | 13,0 Gew.% |
| Äthylenglycoldimethacrylat | 0,15 Gew.% |

Beispiel 3
Copolymerisat auf HEMA-Basis als Linsenmaterial.

Die Linse besitzt eine Geometrie nach der Erfindung ähnlich der im Beispiel 1, jedoch hat das Linsenmaterial die folgende Zusammensetzung:

| | |
|---|---|
| HEMA | 74,5 Gew.% |
| Vinylpyrrolidon | 7,05 Gew.% |
| Methacrylsäure | 7,05 Gew.% |
| Butylmethacrylat | 11,30 Gew.% |
| Triäthylenglycoldimethacrylat | 0,10 Gew.% |

Die Linse besitzt im ungequollenen Zustand einen Durchmesser von 9,19 mm, eine Bevelbreite von 0,15 mm und eine numerische Exzentrizität der Innenfläche von 0,48.

Beispiel 4
Copolymerisat auf HEMA-Basis als Linsenmaterial.

Das Kontaktlinsenmaterial besitzt die folgende Zusammensetzung:

| | |
|---|---|
| HEMA | 56 Mol.% |
| Methacrylsäure | 18,5 Mol.% |
| Dimethylaminoäthylmethacrylat | 15,5 Mol.% |
| Butylmethacrylat | 5,0 Mol.% |
| Triäthylenglycoldimethacrylat | 0,1 Mol.% |

Beispiel 5
Homopolymerisat auf HEMA-Basis als Kontaktlinsenmaterial.

Dieses Material ist bekannt aus der US-PS 4 073 577, insbesondere aus dem Beispiel 1 dieser Druckschrift. Die Linse besitzt im hydratisierten Zustand einen Durchmesser von 13,0 mm, einen Scheitelkrümmungsradius von 8,2 mm und eine Bevelbreite von 0,18 mm. Die numerische Exzentrizität der elliptischen Innenfläche kann 0,36 oder 0,48 betragen.

Die Zusammensetzung der Linse besteht im wesentlichen aus 100% Hydroxyäthylmethacrylat (HEMA). Der Wassergehalt der hydratisierten Kontaktlinse beträgt etwa 38 Gew.%.

Beispiel 6
Homopolymerisat auf HEMA-Basis als Kontaktlinsenmaterial.

Die Linse wird hergestellt wie das Beispiel 5 und besitzt im hydratisierten Zustand einen Durchmesser von 13,0 mm, einen Scheitelkrümmungsradius von 8,20 mm im mittleren Linsenbereich mit einem Durchmesser von 2,00 mm und eine Bevelbreite von 0,21 mm. Die numerische Exzentrizität der Linse auf der Innenfläche beträgt 0,48.

Das Linsenmaterial besitzt eine Shorehärte von 25 bis 50 und eine Reissdehnung von 120%–250%.

Beispiel 7
Weicher Siliconkautschuk als Linsenmaterial.

Die Linse besteht aus weichem Siliconkautschuk wie er im Handel zur Herstellung von Kontaktlinsen erhältlich ist. Im nichthydratisierten Zustand besitzt die Linse einen Durchmesser von 12,5 mm, einen Scheitelkrümmungsradius von 7,60 bis 8,20 mm und eine Bevelbreite von 0,20 mm. Die numerische Exzentrizität der elliptischen Innenfläche der Linse beträgt 0,60.

Durch die elliptische Innenfläche der Siliconlinse wird verhindert, dass die Linse durch Saugwirkung zu stark haftet. Aufgrund der elliptischen Innenfläche ergibt sich eine konstante Schwimmwirkung für die Linse und aufgrund der guten Gleiteigenschaften der Linse werden die hydrophilen Eigenschaften der Oberflächen geschützt.

Es ergeben sich keine Verunreinigungen durch Proteine, Lipide und Muzine aufgrund erhöhter Haftung durch Saugwirkung oder Unbeweglichkeit. Um konstante Gleiteigenschaften sicherzustellen, beträgt der Linsendurchmesser bevorzugt 12,50 mm. Der Scheitelkrümmungsradius in der Mitte der Innenfläche beträgt etwa 7,80 bis 8,40 mm. Die Bevelbreite beträgt 0,20 mm, wodurch das konstante Gleitverhalten der Linse noch verbessert wird. Die numerische Exzentrizität beträgt in Anpassung an die spezielle Elastizität des Materials 0,60. Die Verformungselastizität der Linse beträgt 25–35%. Die Shore A-Härte beträgt 45–60 und die Reissdehnung beträgt 400%–500%.

Beispiel 8
Linsenmaterial auf Polyurethan-Basis.

Als Linsenmaterial wird im Handel erhältliches stark Wasser absorbierendes Polyurethan verwendet. Aufgrund der elliptischen Innengeometrie wird eine gute Gleit- bzw. Schwimmwirkung auf der unter der Linse liegenden Tränenflüssigkeit erzielt. Ferner findet ein optimaler Austausch von metabolischen Produkten statt. Im vollhydratisierten Zustand besitzt die Linse einen Durchmesser von 13,5 mm, einen Scheitelkrümmungsradius im mittleren Bereich der elliptischen Innenfläche von 8,20 mm und eine Bevelbreite von 0,18 mm. Die numerische Exzentrizität der elliptischen Innenfläche beträgt 0,48.

Patentansprüche

1. Linsensatz von weichen Kontaktlinsen mit einer Innenfläche bei der alle Schnitte, die die optische Achse enthalten, Ellipsen sind, dadurch gekennzeichnet, dass im gequollenen Zustand der Linsen (1) sämtliche Linsen einen einzigen Scheitelkrümmungsradius aus dem Bereich von 7,0 bis 9,6 mm und eine einzige numerische Exzentrizität der Ellipsen aufweisen, die einen der Werte im Bereich von 0,1 bis 0,6 besitzt, wodurch eine Sortierung lediglich in Dioptrienwerte ermöglicht wird.

2. Linsensatz nach Anspruch 1, dadurch gekennzeichnet, dass die numerische Exzentrizität 0,2 bis 0,5 und der Scheitelkrümmungsradius 8,0 bis 8,4 mm betragen.

3. Linsensatz nach Anspruch 1, dadurch gekennzeichnet, dass die Exzentrizität 0,3 bis 0,4 und der Scheitelkrümmungsradius 8,2 mm betragen.

4. Linsensatz nach Anspruch 1 oder 2, dadurch gekennzeichnet, dass die Exzentrizität 0,36 oder 0,48 beträgt.

5. Linsensatz nach einem der Ansprüche 1 bis 4, dadurch gekennzeichnet, dass die Mittendicke der gequollenen Linse 0,02 bis 0,6 mm beträgt.

6. Linsensatz nach Anspruch 5, dadurch gekennzeichnet, dass die Mittendicke 0,02 bis 0,25 mm beträgt.

7. Linsensatz nach einem der Ansprüche 1 bis 6, dadurch gekennzeichnet, dass der Enddurchmesser der gequollenen Linse 8,5 bis 15 mm beträgt.

8. Linsensatz nach Anspruch 7, dadurch gekennzeichnet, dass der Enddurchmesser 12,5 bis 14 mm beträgt.

9. Linsensatz nach einem der Ansprüche 1 bis 4, dadurch gekennzeichnet, dass die elliptische Innenkurve (2) in Richtung zum Linsenrand hin tangential in eine umlaufende Bevelzone (B) mit in umgekehrter Richtung gekrümmten, kreissegmentförmigem Querschnitt übergeht, deren Breite 0,5% bis 10% des Linsengesamtdurchmessers beträgt.

10. Linsensatz nach Anspruch 9, dadurch gekennzeichnet, dass die Breite der Bevelzone 0,5% bis 4% des Linsengesamtdurchmessers beträgt.

11. Linsensatz nach Anspruch 10, dadurch gekennzeichnet, dass die Breite der Bevelzone 1,5% bis 2,5% des Linsengesamtdurchmessers beträgt.

12. Linsensatz nach einem der Ansprüche 9 bis 11, dadurch gekennzeichnet, dass bei horizontaler Anordnung der Linse (1) die Querschnittslinie der Bevelzone (B) am Linsenrand auf eine durch den Linsenrand gelegte vertiakel Linie (V) im rechten Winkel auftritt.

13. Linsensatz nach einem der Ansprüche 1 bis 12, dadurch gekennzeichnet, dass das weiche Kontaktlinsenmaterial eine Reissdehnung von 100 bis 500% aufweist.

14. Linsensatz nach einem der Ansprüche 1 bis 13, dadurch gekennzeichnet, dass das weiche Kontaktlinsenmaterial eine Shore-A-Härte von 15 bis 75 aufweist.

15. Linsensatz nach Anspruch 13, dadurch gekennzeichnet, dass die Reissdehnung 120 bis 250% beträgt.

16. Linsensatz nach Anspruch 14, dadurch gekennzeichnet, dass die Shore-A-Härte 25 bis 60 beträgt.

17. Linsensatz nach einem der Ansprüche 1 bis 16, dadurch gekennzeichnet, dass die Hauptkomponente des Kontaktlinsenmaterials Polyhydroxyäthylmethacrylat (HEMA) ist.

18. Linsensatz nach einem der Ansprüche 1 bis 17, dadurch gekennzeichnet, dass das Kontaktlinsenmaterial ein Copolymerisat ist aus 50 bis 90 Gew.% Hydroxyäthylmethacrylat (HEMA), 2 bis 20 Gew.% einer oder mehrerer ungesättigter Carbonsäuren, 2 bis 20 Gew.% eines oder mehrerer basischer Monomere, 5 bis 25 Gew.% aliphatischem Acrylat oder Methacrylat, 0,1 bis 1 Gew.% Vernetzer aus wenigstens einem Glycoldimethacrylat.

19. Linsensatz nach Anspruch 18, dadurch gekennzeichnet, dass die ungesättigte Carbonsäure Acrylsäure und/oder Methacrylsäure ist.

20. Linsensatz nach Anspruch 18 oder 19, dadurch gekennzeichnet, dass das basische Monomer Acrylamid, Methacrylamid, Dimethylaminoäthylmethacrylat, Dimethylaminopropylmethacrylat, N-Vinylpyrrolidon oder N-Vinyl-δ-lactam ist oder eine Mischung davon ist.

21. Linsensatz nach Anspruch 18, dadurch gekennzeichnet, dass das aliphatische Acrylat oder Methacrylat ein aliphatischer Ester der Acrylsäure oder Methacrylsäure ist.

22. Linsensatz nach Anspruch 18, dadurch gekennzeichnet, dass der Vernetzer ein Diäthylenglycoldimethacrylat oder Triäthylenglycoldimethacrylat oder Dipropylenglycoldimethacrylat oder eine Mischung davon ist.

23. Linsensatz nach einem der Ansprüche 1 bis 16, dadurch gekennzeichnet, dass das Kontaktlinsenmaterial Siliconkautschuk ist.

24. Linsensatz nach einem der Ansprüche 1 bis 16, dadurch gekennzeichnet, dass das Kontaktlinsenmaterial weiches Polyurethan ist.

25. Linsensatz nach einem der Ansprüche 1 bis 17, gekennzeichnet durch folgende Zusammensetzung des Kontaktlinsenmaterials:

| | |
|---|---|
| HEMA | 77,8 Gew.% |
| Vinylpyrrolidon | 3,4 Gew.% |
| Methacrylsäure | 5,2 Gew.% |
| Butylmethacrylat | 12,9 Gew.% |
| Triäthylenglycoldimethacrylat | 0,7 Gew.% |

26. Linsensatz nach einem der Ansprüche 1 bis 17, gekennzeichnet durch folgende Zusammensetzung des Kontaktlinsenmaterials:

| | |
|---|---|
| HEMA | 78,35 Gew.% |
| Vinylpyrrolidon | 3,5 Gew.% |
| Methacrylsäure | 5,0 Gew.% |
| Butylmethacrylat | 13,0 Gew.% |
| Äthylenglycoldimethacrylat | 0,15 Gew.% |

27. Linsensatz nach einem der Ansprüche 1 bis 17, gekennzeichnet durch folgende Zusammensetzung des Kontaktlinsenmaterials:

| | |
|---|---|
| HEMA | 74,5 Gew.% |
| Vinylpyrrolidon | 7,05 Gew.% |
| Methacrylsäure | 7,05 Gew.% |
| Butylmethacrylat | 11,30 Gew.% |
| Triäthylenglycoldimethacrylat | 0,10 Gew.% |

28. Linsensatz nach einem der Ansprüche 1 bis 17, dadurch gekennzeichnet, dass das Kontaktlinsenmaterial aus 100% Hydroxyäthylmethacrylat besteht.

29. Linsensatz nach Anspruch 18, dadurch gekennzeichnet, dass der Vernetzer aus 0,1 Gew.% bis 1 Gew.% wenigstens eines Dialkylenglycoldimethacrylat besteht.

30. Linsensatz nach einem der Ansprüche 1 bis 17, gekennzeichnet durch folgende Zusammensetzung des Kontaktlinsenmaterials:

| | |
|---|---|
| HEMA | 56,0 Mol.% |
| Methacrylsäure | 18,5 Mol.% |
| Dimethylaminoäthylmethacrylat | 15,5 Mol.% |
| Butylmethacrylat | 5,0 Mol.% |
| Triäthylenglycoldimethacrylat | 0,1 Mol.% |

31. Linsensatz nach einem der Ansprüche 1 bis 30, dadurch gekennzeichnet, dass die Linsen multifokal ausgebildet sind.

32. Linsensatz nach Anspruch 31, dadurch gekennzeichnet, dass die Linsen bifokal ausgebildet sind.

**Revendications**

1. Une collection de lentilles de contact souples avec une surface interne, dont toutes les sections, qui comportent l'axe optique, sont des ellipses, caractérisée en ce que dans l'état gonflé des lentilles (1) toutes les lentilles présentent un seul rayon de courbure au sommet de 7,0 à 9,6 mm et une seule excentricité numerique des ellipses de 0,1 à 0,6, ainsi permettant un classement des dioptries seulement.

2. Une collection de lentilles selon la revendication 1, caractérisée par une excentricité de 0,2 à 0,5 et un rayon de courbure au sommet de 8,0 à 8,4 mm.

3. Une collection de lentilles selon la revendication 1, caractérisée par une excentricité de 0,3 à 0,4 et un rayon de courbure au sommet de 8,2 mm.

4. Une collection de lentilles selon une des revendications 1 et 2, caractérisée par une excentricité de 0,36 ou 0,48.

5. Une collection de lentilles selon une quelconque des revendications 1 à 4, caractérisée par une épaisseur centrale à l'état hydraté de 0,02 à 0,6 mm.

6. Une collection de lentilles selon la revendication 5, caractérisée par une épaisseur centrale comprise entre 0,02 et 0,25 mm.

7. Une collection de lentilles selon une quelconque des revendications 1 à 6, caractérisée par un diamètre extrême à l'état hydraté de 8,5 à 15 mm.

8. Une collection de lentilles selon la revendication 7, caractérisée par un diamètre extrême compris entre 12,5 et 14 mm.

9. Une collection de lentilles selon une quelconque des revendications 1 à 4, caractérisée en ce que la courbe elliptique interne (2) est prolongée tangentiellement dans le sens du rebord de la lentille, par une partie conique (B) périphérique, présentant une section en forme de segment de cercle incurvée en sens inverse et dont la largeur représente 0,5% à 10% du diamètre total de la lentille.

10. Une collection de lentilles selon la revendication 9, caractérisée en ce que la largeur de la partie conique représente 0,5% à 4% de son diamètre total.

11. Une collection de lentilles selon la revendication 10, caractérisée en ce que la largeur de la partie conique représente 1,5% à 2,5% de son diamètre total.

12. Une collection de lentilles selon une quelconque des revendications 9 à 11, caractérisée en ce que la ligne d'intersection de la partie conique (B) forme un angle droit avec la verticale (V) abaissée sur le rebord de la lentille (1), lorsque cette dernière est en position horizontale.

13. Une collection de lentilles selon une quelconque des revendications 1 à 12, caractérisée par un matériau souple présentant un allongement à la rupture de 100 à 500%.

14. Une collection de lentilles selon une quelconque des revendications 1 à 13, caractérisée par un matériau souple d'une dureté Shore A comprise entre 15 et 75.

15. Une collection de lentilles selon la revendication 13, caractérisée par un allongement à la rupture de 120 à 250%.

16. Une collection de lentilles selon la revendication 14, caractérisée par une dureté Shore A comprise entre 25 et 60.

17. Une collection de lentilles selon une quelconque des revendications 1 à 16, caractérisée par un matériau dont le composant fondamental est du polyhydroxyéthylméthacrylate (HEMA).

18. Une collection de lentilles selon une quelconque des revendications 1 à 17, caractérisée par un matériau copolymère composé de 50 à 90% poids d'hydroxyéthylméthacrylate (HEMA), de 2 à 20% poids d'un ou plusieurs acides carboxyliques non saturés, de 2 à 20% poids d'un ou plusieurs monomères basiques, de 5 à 25% poids d'acrylate ou méthacrylate aliphatiques et de 0,1 à 1% poids de réticulant, représenté par un glycoldiméthacrylate au moins.

19. Une collection de lentilles selon la revendication 18, caractérisée en ce que l'acide carboxylique non saturé est un acide acrylique et/ou méthacrylique.

20. Une collection de lentilles selon une des revendications 18 et 19, caractérisée en ce que le monomère basique est de l'acrylamide, du méthacrylamide, du méthacrylate de diméthylaminoéthyle, du méthacrylate de diméthylaminopropyle, de la N-vinylpyrrolidone ou du N-vinyl-δ-lactame, ou un mélange des corps précités.

21. Une collection de lentilles selon la revendication 18, caractérisée en ce que l'acrylate ou le méthacrylate aliphatique est un ester aliphatique de l'acide acrylique ou méthacrylique.

22. Une collection de lentilles selon la revendication 18, caractérisée en ce que l'agent de réticulation est un diéthylèneglycoldiméthacrylate, triéthylèneglycoldiméthacrylate, dipropylèneglycoldiméthacrylate ou un mélange des corps précités.

23. Une collection de lentilles selon une quelconque des revendications 1 à 16, caractérisée par un matériau en caoutchouc ou silicone.

24. Une collection de lentilles selon une quelconque des revendications 1 à 16, caractérisée par un matériau en polyuréthane souple.

25. Une collection de lentilles selon une quelconque des revendications 1 à 17, caractérisée par un matériau composé comme suit:

| | |
|---|---|
| HEMA | 77,8% poids |
| Vinylpyrrolidone | 3,4% poids |
| Acide méthacrylique | 5,2% poids |
| Méthacrylate de butyle | 12,9% poids |
| Triéthylèneglycoldiméthacrylate | 0,7% poids |

26. Une collection de lentilles selon une quelconque des revendications 1 à 17, caractérisée par la composition suivante de son matériau:

| HEMA | 78,35% poids |
| Vinylpyrrolidone | 3,5 % poids |
| Acide méthacrylique | 5,0 % poids |
| Méthacrylate de butyle | 13,0 % poids |
| Ethylèneglycoldiméthacrylate | 0,15% poids |

27. Une collection de lentilles selon une quelconque des revendications 1 à 17, caractérisée par un matériau de composition suivante:

| HEMA | 74,5 % poids |
| Vinylpyrrolidone | 7,05% poids |
| Acide méthacrylique | 7,05% poids |
| Méthacrylate de butyle | 11,30% poids |
| Triéthylèneglycoldiméthacrylate | 0,10% poids |

28. Une collection de lentilles selon une quelconque des revendications 1 à 17, caractérisée par un matériau comportant 100% d'hydroxyéthylméthacrylate.

29. Une collection de lentilles selon la revendication 18, caractérisée par un agent de réticulation composé de 0,1 à 1% poids d'un dialcoylèneglycoldiméthacrylate au moins.

30. Une collection de lentilles selon une quelconque des revendications 1 à 17, caractérisée par un matériau de composition suivante:

| HEMA | 56,0% mol. |
| Acide méthacrylique | 18,5% mol. |
| Méthacrylate de diméthylaminoéthyle | 15,5% mol. |
| Méthacrylate de butyle | 5,0% mol. |
| Triéthylèneglycoldiméthacrylate | 0,1% mol. |

31. Une collection de lentilles selon une quelconque des revendications 1 à 30, caractérisée par plusieurs foyer.

32. Une collection de lentilles selon la revendication 31, caractérisée par un double foyer .

## Claims

1. A lens set of soft contact lenses having an inner surface for which all sections containing the optical axis are ellipses, characterized in that in the swelled state of the lenses (1) all lenses have one zenith radius of curvature within the range of 7.0 to 9.6 mm and one numerical eccentricity of the ellipses having one of the values within the range of 0.1 to 0.6 whereby an assortment only in diopters is possible.

2. A lens set according to claim 1, characterized in that the numerical eccentricity is 0.2 to 0.5 and the zenith radius of curvature is 8.0 to 8.4 mm.

3. A lens set according to claim 1, characterized in that the eccentricity is 0.3 to 0.4 and the zenith radius of curvature is 8.2 mm.

4. A lens set according to claim 1 or 2, characterized in that the eccentricity is 0.36 or 0.48.

5. A lens set according to any one of claims 1 to 4, characterized in that the centre thickness of the swelled lens is 0.02 to 0.6 mm.

6. A lens set according to claim 5, characterized in that the centre thickness is 0.02 to 0.25 mm.

7. A lens set according to any one of claims 1 to 6, characterized in that the final diameter of the swelled lens is 8.5 to 15 mm.

8. A lens set according to claim 7, characterized in that the final diameter is 12.5 to 14.0 mm.

9. A lens set according to any one of claims 1 to 4, characterized in that, in the direction towards the lens edge, the elliptical inner curve (2) passes tangentially into a peripheral bevelled zone (B) having to opposite curvature and the cross-sectional shape of a circle segment, the width of said zone being 0.5% to 10% of the total lens diameter.

10. A lens set according to claim 9, characterized in that the width of the bevelled zone is 0.5% to 4% of the total lens diameter.

11. A lens set according to claim 10, characterized in that the width of the bevelled zone is 1.5% to 2.5% of the total lens diameter.

12. A lens set according to any one of claims 9 to 11, characterized in that, with the lens (1) in horizontal position, the cross-sectional line of the bevelled zone (B) meets a vertical line (V) passing through the lens edge at a right angle.

13. A lens set according to any one of claims 1 to 12, characterized in that the soft contact lens material has an elongation at break of 100 to 500%.

14. A lens set according to any one of claims 1 to 13, characterized in that the soft contact lens material has a Shore A hardness of 15 to 75.

15. A lens set according to claim 13, characterized in that the elongation at break is 120 to 250%.

16. A lens set according to claim 14, characterized in that the Shore A hardness is 25 to 60.

17. A lens set according to any one of claims 1 to 16, characterized in that the main component of the contact lens material is poly(hydroxyethyl methacrylate) (HEMA).

18. A lens set according to any one of claims 1 to 17, characterized in that the contact lens material is a copolymer of 50 to 90% by weight of hydroxyethyl methacrylate (HEMA), 2 to 20% by weight of one or more unsaturated carboxylic acids, 2 to 20% by weight of one or more basic monomers, 5 to 25% by weight of an aliphatic acrylate or methacrylate, 0,1 to 1% by weight of a cross-linking agent of at least one glycol dimethacrylate.

19. A lens set according to claim 18, characterized in that the unsaturated carboxylic acid is acrylic acid and/or metacrylic acid.

20. A lens set according to claim 18 or 19, characterized in that the basic monomer is acrylamide, methacrylamide, dimethylaminoethyl methacrylate, dimethylaminopropyl methacrylate N-vinyl perrolidone or N-vinyl δ-lactam or a mixture thereof.

21. A lens set according to claim 18, characterized in that the aliphatic acrylate or methacrylate is an aliphatic ester of acrylic acid or methacrylic acid.

22. A lens set according to claim 18, characterized in that the cross-linking agent is a diethyleneglycol dimethacrylate or triethyleneglycol dimethacrylate or a mixture thereof.

23. A lens set according to any one of claims 1 to 16, characterized in that the contact lens material is silicone rubber.

24. A lens set according to any one of claims 1 to 16, characterized in that the contact lens material is soft polyurethane.

25. A lens set according to any one of claims 1 to 17, characterized by the following composition of the contact lens material:

| | |
|---|---|
| HEMA | 77.8% by weight |
| Vinyl pyrrolidone | 3.4% by weight |
| Methacrylic acid | 5.2% by weight |
| Butyl methacrylate | 12.9% by weight |
| Triethyleneglycol dimethacrylate | 0.7% by weight |

26. A lens set according to any one of claims 1 to 17, characterized by the following composition of the contact lens material:

| | |
|---|---|
| HEMA | 78.35% by weight |
| Vinyl pyrrolidone | 3.5 % by weight |
| Methacrylic acid | 5.0 % by weight |
| Butyl methacrylate | 13.0 % by weight |
| Ethyleneglycol dimethacrylate | 0.15% by weight |

27. A lens set according to any one of claims 1 to 17, characterized by the following composition of the contact lens material:

| | |
|---|---|
| HEMA | 74.5 % by weight |
| Vinyl pyrrolidon | 7.05% by weight |
| Methacrylic acid | 7.05% by weight |
| Butyl methacrylate | 11.30% by weight |
| Triethyleneglycol dimethacrylate | 0.10% by weight |

28. A lens set according to any one of claims 1 to 17, characterized in that the contact lens material is 100% hydroxyethyl methacrylate.

29. A lens set according to claim 18, characterized in that the cross-linking agent consists of 0.1% by weight to 1% by weight of at least one dialkyleneglycol dimethacrylate.

30. A lens set according to any one of claims 1 to 17, characterized by the following composition of the contact lens material:

| | |
|---|---|
| HEMA | 56.0 mol% |
| Methacrylic acid | 18.5 mol% |
| Dimethylaminoethylmethacrylate | 15.5 mol% |
| Butyl methacrylate | 5.0 mol% |
| Triethyleneglycol dimethacrylate | 0.1 mol% |

31. A lens set according to any one of claims 1 to 30, characterized by being formed to be multifocal.

32. A lens set according to claim 31, characterized by being formed to be bifocal.

FIG.2

FIG.1